# EUROPEAN PATENT APPLICATION

(11) **EP 3 007 376 A1**
(43) Date of publication of application: **13.04.2016**
(21) Application number: 14306569.6
(22) Date of filing: 06.10.2014
(51) Int. Cl.: H04B 17/29, H04B 17/15, H04B 17/00

(54) **Multi-band testing method and apparatus**

(71) Applicant: ALCATEL LUCENT, 92100 Boulogne-Billancourt (FR)
(72) Inventor: Bitzer, Thomas, 70435 Stuttgart (DE); Ng, Man Hung, Swindon, Greater London WI SN5 7DJ (GB)
(74) Representative: Huber, Meik

(57) **Abstract**

The present invention relates to a method and apparatus for multi-band testing. A first multi-carrier signal in a lower frequency band of the maximum radio bandwidth of the multi-band transmitter is received. The first multi-carrier signal has a narrowband carrier located at the higher edge of the lower frequency band and a wideband carrier. A second multi-carrier signal in a higher frequency band of the maximum radio bandwidth of the multi-band transmitter is received. The second multi-carrier signal has a narrowband carrier located at the lower edge of the higher frequency band and a wideband carrier. Between the lower frequency band and the higher frequency band, a frequency gap is present. The wideband carrier in the lower frequency band is located in the lower frequency band such that its third order intermodulation product with the narrowband carrier in the lower frequency band is generated in the middle of the frequency gap. The wideband carrier in the higher frequency band is located in the higher frequency band such that its third order intermodulation product with the narrowband carrier in the higher frequency band is generated in the middle of the frequency gap. The transmitter test is performed with the first and second signal.

## Description

### FIELD OF THE INVENTION

The present invention relates to a method and apparatus for multi-band testing.

### BACKGROUND OF THE INVENTION

This section introduces aspects that may be helpful in facilitating a better understanding of the invention. Accordingly, the statements of this section are to be read in this light and are not to be understood as admission about what is in the prior art.

3GPP has been working to define in TS 36.141 and TS 37.141 frequency requirements for test configurations to be used for testing of Multi-Band Radio Base Stations. This is to ensure that different devices of different manufacturers satisfy the same interface specifications. Purpose of the testing is to discover if a device satisfies all predefined requirements under predefined conditions.

For testing, three band Carrier Aggregation (CA) in the downlink has been standardized by 3GPP. Radio Frequency (RF) requirements and tests of Multi-Band (MB) Baste Station (BS) supporting three bands is an open topic. 3GPP has defined multi-band test configurations in TS 36.141. In chapter 4.10.4 and 4.10.5, multi-band test configuration for full carrier allocation (ETC4) and multi-band test configuration with high PSD per carrier (ETC5) are defined, respectively.

This assumes that the test signals of such test configurations can be provided by the device, e.g. a base station under test.

Each concerned band within the maximum radio bandwidth of a base station is considered as an independent band and corresponding test configurations are applied to each band independently. Therefore, for each band of the Multi-Band Radio Base Station, the same test configuration is applied and the corresponding signals are generated for testing.

### SUMMARY OF THE INVENTION

It is an object of the invention to improve the above test configurations. Especially, according to the invention a test configuration is provided, which may be used to perform a Radio Frequency test of a Multi-Band Baste Station where the number of frequency bands that are operated simultaneously is smaller than the number of frequency bands supported by the Multi-Band Base Station. This may be due to resource constraints in base band processing or the like.

According to one embodiment, a method for testing a multi-band transmitter is proposed. A first multi-carrier signal in a lower frequency band of the maximum radio bandwidth of the multi-band transmitter is received. The first multi-carrier signal has a narrowband carrier located at the higher edge of the lower frequency band and a wideband carrier. This means that within the band in which the signal is received, two carriers are located, a narrowband carrier and a wideband carrier. I.e. the first multi-carrier signal is composed of at least two signals at two different carriers. A second multi-carrier signal in a higher frequency band of the maximum radio bandwidth of the multi-band transmitter is received. The second multi-carrier signal has a narrowband carrier located at the lower edge of the higher frequency band and a wideband carrier. Between the lower frequency band and the higher frequency band, a frequency gap is present. A frequency gap means that the lower frequency band and the higher frequency band do not lie directly one beside the other on the frequency axis, but that there is a certain distance between the lower frequency band and the higher frequency band. This distance between the upper edge of the lower frequency band and the lower edge of the upper frequency band is referred to as frequency gap. The wideband carrier in the lower frequency band is located in the lower frequency band such that its third order intermodulation product with the narrowband carrier in the lower frequency band is generated in the middle of the frequency gap. Thus, the two carriers in the lower frequency band are located with regard to each other the like that their third order intermodulation product falls into the middle of the frequency gap. The wideband carrier in the higher frequency band is located in the higher frequency band such that its third order intermodulation product with the narrowband carrier in the higher frequency band is generated in the middle of the frequency gap. Thus, the two carriers in the higher frequency band are located with regard to each other the like that their third order intermodulation product falls into the middle of the frequency gap. A multi-band transmitter test is performed using the received first and second signal. Lower frequency band and higher frequency band is not to be understood to be the lowest or the highest frequency band of the maximum radio bandwidth but is to be understood as their position in the frequency space with regard to each other. In one embodiment, the lower frequency band is the lowest frequency band available in a transmitter under test within the maximum radio bandwidth. In one embodiment, the higher frequency band is the highest frequency band available in a transmitter under test within the maximum radio bandwidth. This method is beneficial in cases where radio frequency tests for Multi-Band Base Stations are performed but only a limited number of supported frequency bands can be operated at the same time. While testing all frequency bands at the same time gives accurate results, this is not possible with base stations which can only operate a limited number of frequency bands simultaneously, e.g. due to resource constraints in the base band processing units. The proposed method provides accurate testing results even if the Multi-Band Base Station under test can only operate a limited number of supported frequency bands simultaneously. In addition, the method is more efficient than testing all frequency bands.

According to one embodiment, the width of the frequency gap between the lower frequency band and the higher frequency band is the width of the smallest Inter RF Bandwidth Gap. The Inter RF Bandwidth Gap is defined in terms of a frequency range for a base station and means the frequency gap between two consecutive RF bandwidths that are placed within two supported operating bands.

According to one embodiment, if the wideband carrier in the lower frequency band cannot be located such that its third order intermodulation product with the narrowband carrier in the lower frequency band is generated in the middle of the frequency gap, e.g. because no two carrier frequencies are available in the lower frequency band for which their third order intermodulation product falls in the middle of the frequency gap, the wideband carrier in the lower frequency band is located at the lower edge of the lower frequency band. Further, if the wideband carrier in the higher frequency band cannot be located such that its third order intermodulation product with the narrowband carrier in the higher frequency band is generated in the middle of the frequency gap, e.g. because no two carrier frequencies are available in the higher frequency band for which their third order intermodulation product falls in the middle of the frequency gap, the wideband carrier in the higher frequency band is located at the higher edge of the higher frequency band.

According to one embodiment, a third multi-carrier signal in a lowest frequency band of the maximum radio bandwidth of the multi-band transmitter is received. The third multi-carrier signal has a narrowband carrier at the lower edge of the lowest frequency band and a wideband carrier at the higher edge of the lowest frequency band. Further, a fourth multi-carrier signal in a highest frequency band of the maximum radio bandwidth of the multi-band transmitter is received. The fourth multi-carrier signal has a wideband carrier at the lower edge of the highest frequency band and a narrowband carrier at the higher edge of the highest frequency band. In addition to the multi-band transmitter test as described above, a multi-band transmitter test using the received third and fourth signal is performed.

According to one embodiment, the narrowband carriers are carriers with the minimum declared carrier bandwidth and/or the wideband carriers are carriers with the maximum declared radio bandwidth. The minimum declared carrier bandwidth and the maximum declared carrier bandwidth are defined in the specification of the transmitter under test and according to the corresponding standard, e.g. of 3GPP to which the transmitter under test is compliant to.

According to one embodiment, the performed transmitter test is at least one of a base station output power test, transmitter ON/OFF power test, error vector magnitude test, time alignment error test, adjacent channel leakage power ratio test, cumulative adjacent channel leakage power ratio requirement in non-contiguous spectrum test, operating band unwanted emissions test and transmitter spurious emissions test.

According to one embodiment, the multi-band transmitter which is tested according to the above described method is a transmitter of a Multi-Band Base Station and generates the multi-carrier signals. The signals are emitted by at least one receiver port of the base station. The transmitter ports are terminated and receiver spurious emissions are measured by the transmitter test.

According to one embodiment, a method for testing a multi-band receiver is proposed. A first multi-carrier signal in a lower frequency band of the maximum radio bandwidth of the multi-band receiver is received. The first multi-carrier signal has a narrowband carrier located at the higher edge of the lower frequency band and a wideband carrier. The first signal is overlaid by an interfering signal. A second multi-carrier signal in a higher frequency band of the maximum radio bandwidth of the multi-band receiver is received. The second multi-carrier signal has a narrowband carrier located at the lower edge of the higher frequency band and a wideband carrier. The second signal is overlaid by an interfering signal. The lower frequency band and the higher frequency band are arranged such that a frequency gap between the lower frequency band and the higher frequency band is present. A frequency gap means that the lower frequency band and the higher frequency band do not lie directly one beside the other on the frequency axis, but that there is a certain distance between the lower frequency band and the higher frequency band. This distance between the upper edge of the lower frequency band and the lower edge of the upper frequency band is referred to as frequency gap. The wideband carrier in the lower frequency band is located in the lower frequency band such that its third order intermodulation product with the narrowband carrier in the lower frequency band is generated in the middle of the frequency gap. Thus, the two carriers in the lower frequency band are located with regard to each other the like that their third order intermodulation product falls into the middle of the frequency gap. The wideband carrier in the higher frequency band is located in the higher frequency band such that its third order intermodulation product with the narrowband carrier in the higher frequency band is generated in the middle of the frequency gap. Thus, the two carriers in the higher frequency band are located with regard to each other the like that their third order intermodulation products fall into the middle of the frequency gap. A multi-band receiver test using the received first and second signal is performed.

According to one embodiment, the width of the frequency gap between the lower frequency band and the higher frequency band is the width of the smallest Inter RF Bandwidth Gap.

According to one embodiment, in case the wideband carrier in the lower frequency band cannot be located such that its third order intermodulation product with the narrowband carrier in the lower frequency band is generated in the middle of the frequency gap, the wideband carrier in the lower frequency band is located at the lower edge of the lower frequency band. In case the wideband carrier in the higher frequency band cannot be located such that its third order intermodulation product with the narrowband carrier in the higher frequency band is generated in the middle of the frequency gap, the wideband carrier in the higher frequency band is located at the higher edge of the higher frequency band.

According to one embodiment, a third multi-carrier signal in a lowest frequency band of the maximum radio bandwidth of the multi-band receiver is received. The third multi-carrier signal has a narrowband carrier at the lower edge of the lowest frequency band and a wideband carrier at the higher edge of the lowest frequency band. A fourth multi-carrier signal in a highest frequency band of the maximum radio bandwidth of the multi-band receiver is received. The fourth multi-carrier signal has a wideband carrier at the lower edge of the highest frequency band and a narrowband carrier at the higher edge of the highest frequency band. A multi-band receiver test using the received third and fourth signal is performed.

According to one embodiment, the narrowband carriers are carriers with the minimum declared carrier bandwidth. According to one embodiment, the wideband carriers are carriers with the maximum declared radio bandwidth. The minimum declared carrier bandwidth and the maximum declared carrier bandwidth are defined in the specification of the receiver under test and according to the corresponding standard, e.g. of 3GPP to which the receiver under test is compliant to.

According to one embodiment, the receiver test is at least one of a adjacent channel selectivity and narrowband blocking test, a blocking characteristics test and a receiver intermodulation test. According to one embodiment, the interfering signal is composed of a combination of a CW interfering signal and a modulated interfering signal.

According to one embodiment, an apparatus for generating a multi-band receiver testing signal is proposed. The apparatus comprises a first signal generator for generating a first multi-carrier signal in a lower frequency band of the maximum radio bandwidth of the multi-band receiver. The first multi-carrier signal having a narrowband carrier located at the higher edge of the lower frequency band and a wideband carrier. The first signal generator is further for generating a second multi-carrier signal in a higher frequency band of the maximum radio bandwidth of the multi-band receiver. The second multi-carrier signal having a narrowband carrier located at the lower edge of the higher frequency band and a wideband carrier. A frequency gap is between the lower frequency band and the higher frequency band. The wideband carrier in the lower frequency band is located in the lower frequency band such that its third order intermodulation product with the narrowband carrier in the lower frequency band is generated in the middle of the frequency gap. The wideband carrier in the higher frequency band is located in the higher frequency band such that its third order intermodulation product with the narrowband carrier in the higher frequency band is generated in the middle of the frequency gap. The apparatus further comprises a second signal generator for generating an interfering signal. The apparatus further comprises a first coupler for coupling the signals of the first signal generator and the second signal generator.

According to one embodiment, a system for performing a multi-band transmitter test is proposed. The system comprises a transmitter including a signal generator for generating a first multi-carrier signal in a lower frequency band of the maximum radio bandwidth of the multi-band transmitter. The first multi-carrier signal has a narrowband carrier located at the higher edge of the lower frequency band and a wideband carrier. The signal generator is further for generating a second multi-carrier signal in a higher frequency band of the maximum radio bandwidth of the multi-band transmitter. The second multi-carrier signal has a carrier located at the lower edge of the higher frequency band and a wideband carrier. A frequency gap is present between the lower frequency band and the higher frequency band. The wideband carrier in the lower frequency band is located in the lower frequency band such that its third order intermodulation product with the narrowband carrier in the lower frequency band is generated in the middle of the frequency gap. The wideband carrier in the higher frequency band is located in the higher frequency band such that its third order intermodulation product with the narrowband carrier in the higher frequency band is generated in the middle of the frequency gap. The system further comprises a test equipment comprising a receiver for receiving the first and second signal. The system further comprises a processor for performing a transmitter test using the received first and second signal.

Further advantageous features of the embodiments of the invention are defined and are described in the following detailed description.

### BRIEF DESCRIPTION OF THE DRAWINGS

Some embodiments of apparatuses and methods in accordance with embodiments of the present invention are now described, by way of examples only, and with reference to the accompanying drawings, in which:
- Fig. 1: Carrier spectrum for multi-band radio base station testing
- Fig. 2: Carrier spectrum for multi-band radio base station testing according to the invention
- Fig. 3: Carrier spectrum for multi-band radio base station testing according to the invention
- Fig. 4: Set-up for multi-band radio base station output power, transmitter ON/OFF power, error vector magnitude, transmitter spurious emissions and operating band unwanted emission testing
- Fig. 5: Set-up for transmitter time alignment error testing
- Fig. 6: Set-up for receiver adjacent channel selectivity (ACS) and narrowband blocking characteristics testing
- Fig. 7: Set-up for receiver spurious emissions testing
- Fig. 8: Set-up for receiver intermodulation testing

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

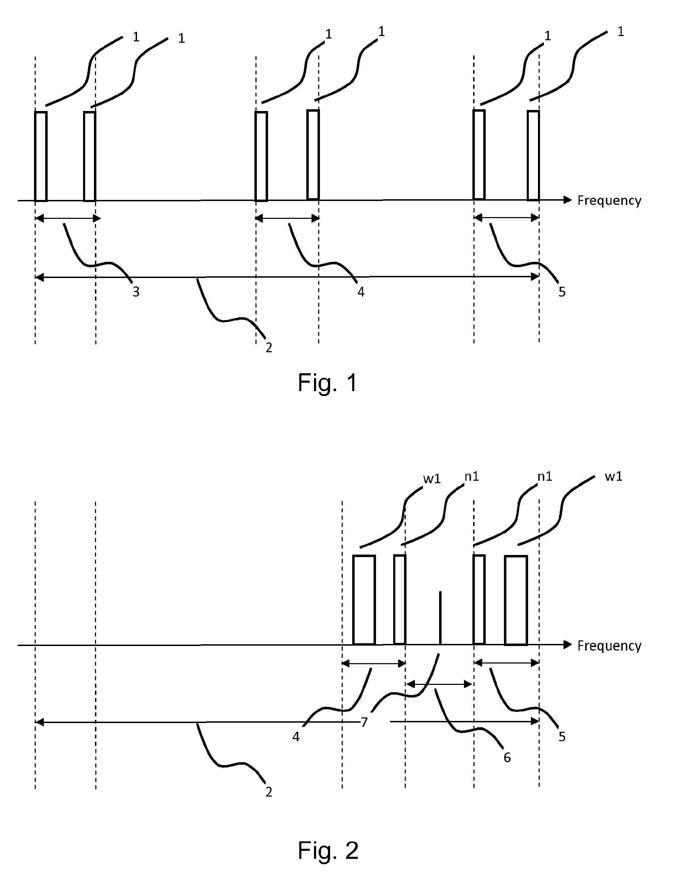

Fig. 1 shows an example of a multi-band signal used for Multi-Band Radio Base Station testing as known in the art. A maximum radio bandwidth 2 of the base station is depicted. The maximum radio bandwidth 2 is the maximum frequency difference between the upper edge of the highest used carrier and the lower edge of the lowest used carrier. The maximum radio bandwidth 2 of the base station is divided in multiple frequency bands 3, 4, 5 (only some of them are shown exemplarily in the figures). By way of example only, the frequency bands 3, 4, 5 have the same bandwidth. This bandwidth is equal or less to the supported frequency bandwidth for a band of the system. A lower frequency band 3 is located at the lower edge of the maximum radio bandwidth 2 of the base station. A higher frequency band 5 is located at the upper edge of the maximum radio bandwidth 2 of the base station. A middle frequency band 4 is located between the lower frequency band 3 and the higher frequency band 5. All frequency bands 3, 4, 5 are used one after another or all together for transmitter or receiver tests.

Fig. 2 discloses a multi-band test signal according to the invention. The maximum radio bandwidth 2 is the maximum frequency difference between the upper edge of the highest used carrier and the lower edge of the lowest used carrier. Also in this figure, only some of the frequency bands are shown by way of example to illustrate the principle. The lower frequency band 4 is located close to the higher frequency band 5 in this example. Therefore, between the lower frequency band 4 and the higher frequency band 5, a small frequency gap 6 is present. A frequency gap 6 means that the lower frequency band 4 and the higher frequency band 5 are not directly consecutive, but that some frequency spectrum not belonging to any of the two bands is between them. The width of the frequency gap 6 between the lower frequency band 4 and the higher frequency band 5 is the width of the smallest Inter RF Bandwidth Gap. The width of the smallest Inter RF Bandwidth Gap is defined according to the system specification, e.g. according to the specification of 3GPP. In the lower frequency band 4 and in the higher frequency band 5, a multi-carrier signal is present. The multi-carrier signal consists of a narrowband carrier signal n1 and a wideband carrier signal w1. The narrowband carrier signal n1 is located at the edge to the frequency gap 6, i.e. in the lower frequency band 4, the narrowband carrier signal n1 is located at the higher edge and in the higher frequency band 5, the narrowband carrier signal n1 is located at the lower edge. The wideband carrier signal w1 of the multi-carrier signal generates third order intermodulation products with the narrowband carrier signal n1. The wideband carrier signal w1 in the lower frequency band 4 is located the like that its third order intermodulation product with the narrowband carrier signal n1 in the lower frequency band 4 lies in the middle 7 of the frequency gap 6. The wideband carrier signal w1 in the higher frequency band 5 is located the like that its third order intermodulation product with the narrowband carrier signal n1 in the higher frequency band 5 lies in the middle 7 of the frequency gap 6. Thus, both third order intermodulation products of the multi-carrier signals in the lower frequency band 4 and in the higher frequency band 5 fall together at the same frequency, which is the frequency in the middle 7 of the frequency gap 6. In case the wideband carrier signals w1 of the lower frequency band 4 and the higher frequency band 5 cannot be arranged as described above, maybe due to the overall band arrangements and the size of the frequency gap 6, the wideband carrier signal w1 of the lower frequency band 4 is arranged at the lower edge of the lower frequency band 4. The wideband carrier signal w1 of the higher frequency band 5 is arranged at the higher edge of the higher frequency band 5.

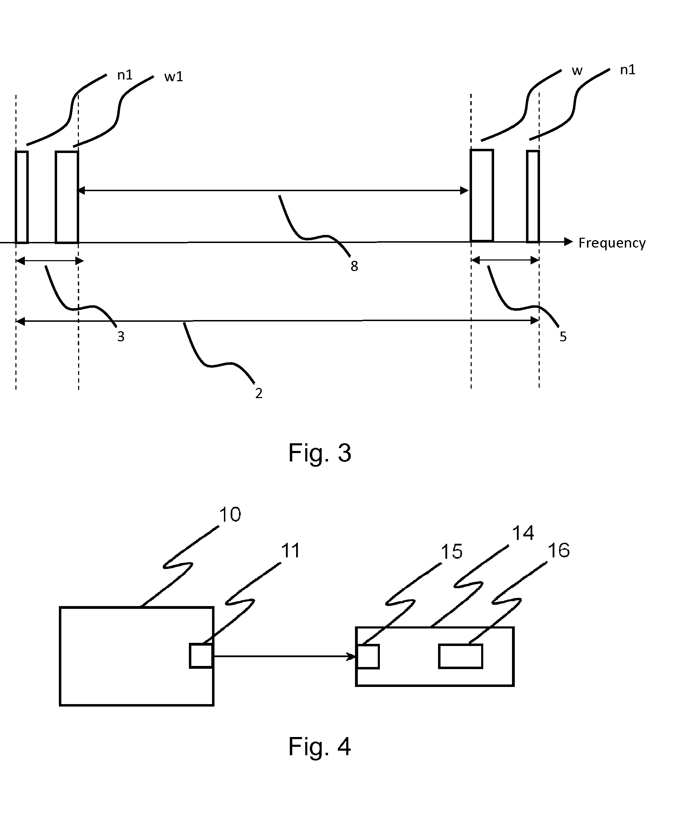

Fig. 3 discloses a further multi-band test signal according to the invention. The maximum radio bandwidth 2 is the maximum frequency difference between the upper edge of the highest used carrier and the lower edge of the lowest used carrier. Also in this figure, only some of the frequency bands are shown by way of example to illustrate the principle. The lower frequency band 3 is located at the lower edge of the maximum radio bandwidth 2. The higher frequency band 5 is located at the upper edge of the maximum radio bandwidth 2. This leads to the highest possible instantaneous radio bandwidth, which means that the frequency gap 8 between the lower frequency band 3 and the higher frequency band 5 is maximized considering the available frequency spectrum. If it is not possible to operate a frequency band at the lower edge of the maximum radio bandwidth 2 and at the higher edge of the maximum radio bandwidth 2 at the same time, the lower frequency band 3 and the higher frequency band 5 are selected the like that the highest possible instantaneous radio bandwidth is used. This means, the lower frequency band 3 and the higher frequency band 5 are selected such that the frequency gap 8 between the two bands is maximized. A narrowband carrier signal n1 is located at the outer edges of the two frequency bands, i.e. in the lower frequency band 3, the narrowband carrier signal n1 is placed at the lower edge and in the higher frequency band 5, the narrowband carrier signal n1 is placed at the higher edge. A wideband carrier signal w1 is placed at the inner edges of the two frequency bands, i.e. in the lower frequency band 3, the wideband carrier signal w1 is placed at the higher edge and in the higher frequency band, the wideband carrier signal w1 is placed at the lower edge. Such a test configuration is used as improved test conditions corresponding to test conditions of, e.g. 3 GPP TS 36.141 - ETC4 and ETC5, in order to provide a more meaningful test scenario. Combining the test configuration as described above with regard to Figs. 2 and 3 leads to meaningful RF tests of Multi-Band Base Stations. The test configuration according to Fig. 2 targets the performance in the smallest gap between the frequency bands and the test configuration according to Fig. 3 targets the highest possible instantaneous radio bandwidth and the frequency range outside of the outermost frequency bands. This combination allows a meaningful Multi-Band Base Station test without applying test signals in all radio frequency bands and is thus a solution for Base Station testing of Baste Stations for which the number of frequency bands that can be operated simultaneously is smaller than the number of frequency bands supported by the Multi-Band Base Station, e.g. due to resource constraints in the baseband processing.

Fig. 4 depicts a measurement set-up for multi-band radio base station output power, transmitter ON/OFF power, error vector magnitude, transmitter spurious emissions and operating band unwanted emission testing. The base station 10 under test comprises a multi-band transmitter 11. The multi-band transmitter 11 is for generating at least a first multi-band test signal as described with regard to Fig. 2 above. The multi-band transmitter 11 is further for generating at least a second multi-band test signal as described with regard to Fig. 3 above. The transmitter 11 output is connected to a measurement equipment 14 comprising at least a receiver 15 and a testing unit 16 for performing a transmitter test. The testing unit 16 performs at least one of an output power, transmitter ON/OFF power, error vector magnitude, transmitter spurious emissions and operating band unwanted emission test using the data received by the receiver 15.

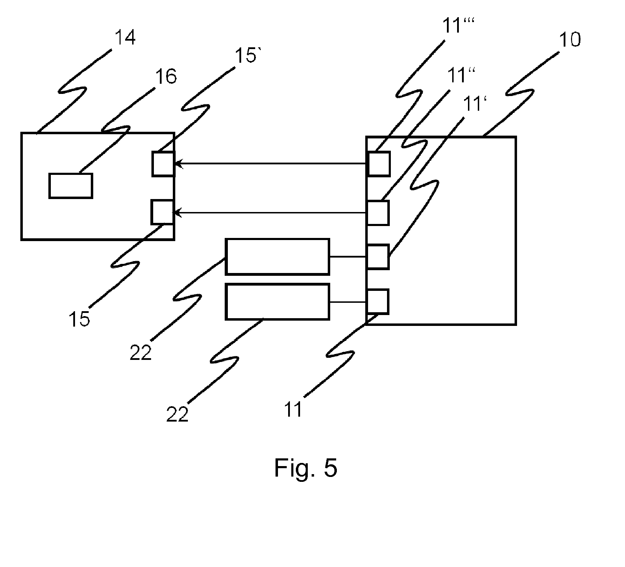

Fig. 5 depicts a measurement set-up for time alignment error testing. The base station 10 under test comprises four multi-band transmitters 11, 11', 11", 11"'. The multi-band transmitters 11, 11', 11", 11"' are each for generating at least a first multi-band test signal as described with regard to Fig. 2 above. The multi-band transmitters 11, 11', 11", 11"' are further for generating at least a second multi-band test signal as described with regard to Fig. 3 above. The outputs of two multi-band transmitters 11, 11' are terminated by termination modules 22. The outputs of the other two multi-band transmitters 11", 11"' are connected to respective receivers 15, 15' of a measurement unit 14. The measurement unit 14 comprises a testing unit 16 for performing a time alignment error test.

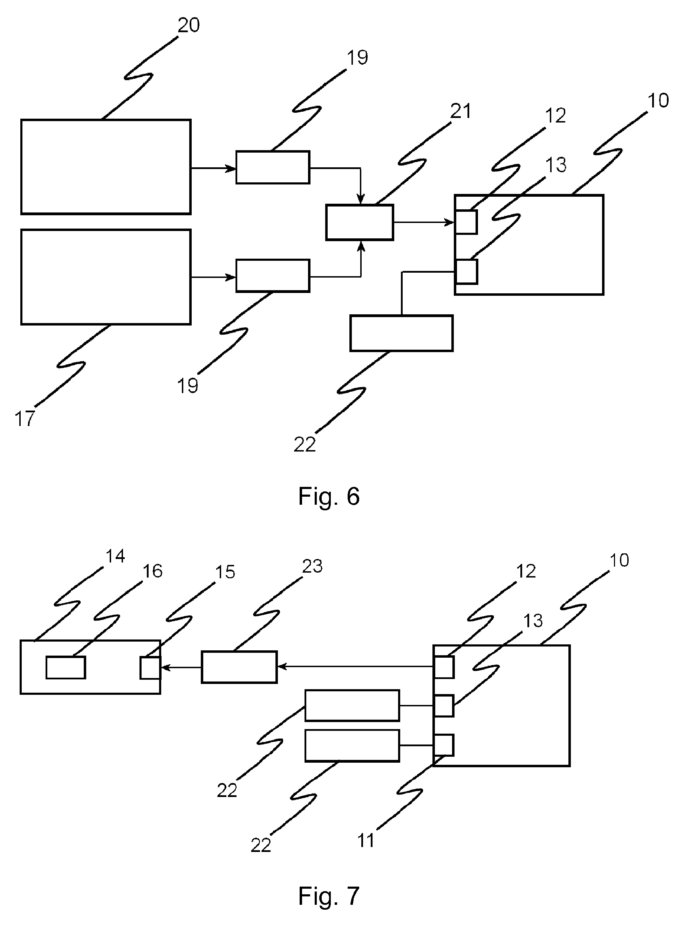

Fig. 6 depicts a measurement set-up for receiver adjacent channel selectivity (ACS) and narrowband blocking characteristics testing. The base station 10 under test includes at least one receiver 12 to be tested. The receiver 12 is for receiving at least a first multi-band test signal as described with regard to Fig. 2 above. The multi-band receiver 12 is further for receiving at least a second multi-band test signal as described with regard to Fig. 3 above. Further receivers 13 of the base station 10 are connected to a termination module 22 so that they do not influence the measurement. The output signal of a signal generator 20 generating a wanted signal, which simulates a signal as described above to be received by the receiver and the output signal of a signal generator 17 for an interfering signal, which simulates disturbing signals in the band and out of band, are connected by attenuators 19 to a hybrid 21. The output signal of the hybrid 21 composed of the output signals of both signal generators 17, 20 is connected to the receiver 12 under test. In case blocking characteristics test is made for a RX/TX module, a circulator is included in the path between the RX/TX module under test and the hybrid 21, and one output of the circulator is connected to a termination module.

Fig. 7 depicts a measurement set-up for receiver spurious emissions testing. The base station 10 under test comprises a multi-band transmitter 11. The multi-band transmitter 11 is for generating at least a first multi-band test signal as described with regard to Fig. 2 above. The multi-band transmitter 11 is further for generating at least a second multi-band test signal as described with regard to Fig. 3 above. The multi-band transmitter output is connected to a termination module 22. Further, the base station 10 comprises a receiver 12, which is connected to a notch filter 23 for passing only the frequency band of the transmitter 11. The base station comprises further receivers 13 which are connected to a termination module 22 in order that they do not influence the measurement. The output of the notch filter 23 is connected to a measurement unit 14 comprising a receiver 15 and a testing unit 16 for performing a spurious emissions test.

Fig. 8 depicts a measurement set-up for receiver intermodulation testing. The base station 10 under test includes at least one receiver 12 to be tested. The multi-band receiver 12 is for receiving at least a first multi-band test signal as described with regard to Fig. 2 above. The multi-band receiver 12 is further for receiving at least a second multi-band test signal as described with regard to Fig. 3 above. Further receivers 13 of the base station 10 are connected to a termination module 22 so that they do not influence the measurement. The output signal of a signal generator 20 for a wanted signal simulating a signal as described above to be received by the receiver is attenuated by an attenuator 19. The attenuated signal and a disturbing signal are connected to a hybrid 21. The output signal of the hybrid 21 is connected to the receiver 12 under test. For generating the disturbing signal, a signal generator 24 for a continuous wave (CW) interfering signal and a signal generator 25 for a modulated interfering signal are connected via attenuators 19 to a hybrid 21. The output of the hybrid 21 is the disturbing signal.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for testing a multi-band transmitter (11), comprising the steps:
- receiving a first multi-carrier signal in a lower frequency band (4) of the maximum radio bandwidth (2) of the multi-band transmitter (11), the first multi-carrier signal having a narrowband carrier (n1) located at the higher edge of the lower frequency band (4) and a wideband carrier (w1);
- receiving a second multi-carrier signal in a higher frequency band (5) of the maximum radio bandwidth (2) of the multi-band transmitter (11), the second multi-carrier signal having a narrowband carrier (n1) located at the lower edge of the higher frequency band (5) and a wideband carrier (w1); wherein
a frequency gap (6) is between the lower frequency band (4) and the higher frequency band (5); and wherein
the wideband carrier (w1) in the lower frequency band (4) is located in the lower frequency band (4) such that its third order intermodulation product with the narrowband carrier (n1) in the lower frequency band (4) is generated in the middle of the frequency gap (6), and wherein
the wideband carrier (w1) in the higher frequency band (5) is located in the higher frequency band (5) such that its third order intermodulation product with the narrowband carrier (n1) in the higher frequency band (5) is generated in the middle (7) of the frequency gap (6);
- performing a multi-band transmitter test using the received first and second signal.

2. Method for testing a multi-band transmitter according to claim 1, wherein the width of the frequency gap between the lower frequency band and the higher frequency band is the width of the smallest Inter RF Bandwidth Gap.

3. Method for testing a multi-band transmitter according to claim 1 or 2, wherein if the wideband carrier (w1) in the lower frequency band (4) cannot be located such that its third order intermodulation product with the narrowband carrier (n1) in the lower frequency band (4) is generated in the middle (7) of the frequency gap (6), locating the wideband carrier (w1) in the lower frequency band (4) at the lower edge of the lower frequency band (4), and wherein
if the wideband carrier (w1) in the higher frequency band (5) cannot be located such that its third order intermodulation product with the narrowband carrier (n1) in the higher frequency band (5) is generated in the middle (7) of the frequency gap (6), locating the wideband carrier (w1) in the higher frequency band (5) at the higher edge of the higher frequency band (5).

4. Method for testing a transmitter according to one of claims 1 to 3, wherein the method further comprising the steps:
- receiving a third multi-carrier signal in a lowest frequency band (3) of the maximum radio bandwidth (2) of the multi-band transmitter (11), the third multi-carrier signal having a narrowband carrier (n1) at the lower edge of the lowest frequency band (3) and a wideband carrier (w1) at the higher edge of the lowest frequency band (3);
- receiving a fourth multi-carrier signal in a highest frequency band (5) of the maximum radio bandwidth (2) of the multi-band transmitter (11), the fourth multi-carrier signal having a wideband carrier (w1) at the lower edge of the highest frequency band (5) and a narrowband carrier (n1) at the higher edge of the highest frequency band (5); and
- performing a multi-band transmitter test using the received third and fourth signal.

5. Method for testing a multi-band transmitter according to one of claims 1 to 4, wherein the narrowband carriers are carriers with the minimum declared carrier bandwidth and/or the wideband carriers are carriers with the maximum declared radio bandwidth.

6. Method for testing a transmitter according to claim 1 or 5, wherein the performed transmitter test is at least one of a base station output power test, transmitter ON/OFF power test, error vector magnitude test, time alignment error test, adjacent channel leakage power ratio test, cumulative adjacent channel leakage power ratio requirement in non-contiguous spectrum test, operating band unwanted emissions test and transmitter spurious emissions test.

7. Method for testing a transmitter according to claim one of claims 1 to 5, wherein the multi-band transmitter is a transmitter of a multi-band base station and generates the multi-carrier signals, and the signals are emitted by at least one receiver port of the base station (10) when the transmitter ports are terminated, and receiver spurious emissions are measured by the transmitter test.

8. Method for testing a multi-band receiver (12), comprising the steps of:
- receiving a first multi-carrier signal in a lower frequency band (4) of the maximum radio bandwidth (2) of the multi-band receiver (12), the first multi-carrier signal having a narrowband carrier (n1) located at the higher edge of the lower frequency band (4) and a wideband carrier (w1), the first signal being overlaid by an interfering signal;
- receiving a second multi-carrier signal in a higher frequency band (5) of the maximum radio bandwidth (2) of the multi-band receiver (12), the second multi-carrier signal having a narrowband carrier (n1) located at the lower edge of the higher frequency band (5) and a wideband carrier (w1), the second signal being overlaid by an interfering signal; wherein
a frequency gap (6) is between the lower frequency band (4) and the higher frequency band (5); and wherein
the wideband carrier (w1) in the lower frequency band (4) is located in the lower frequency band (4) such that its third order intermodulation product with the narrowband carrier (n1) in the lower frequency band (4) is generated in the middle (7) of the frequency gap (6), and wherein
the wideband carrier (w1) in the higher frequency band (5) is located in the higher frequency band (5) such that its third order intermodulation product with the narrowband carrier (n1) in the higher frequency band (5) is generated in the middle (7) of the frequency gap (6);
- performing a multi-band receiver test using the received first and second signal.

9. Method for testing a multi-band receiver according to claim 8, wherein the width of the frequency gap between the lower frequency band and the higher frequency band is the width of the smallest Inter RF Bandwidth Gap.

10. Method for testing a multi-band receiver according to claim 8 or 9, wherein if the wideband carrier (w1) in the lower frequency band (4) cannot be located such that its third order intermodulation product with the narrowband carrier (n1) in the lower frequency band (4) is generated in the middle (7) of the frequency gap (6), locating the wideband carrier (w1) in the lower frequency band (4) at the lower edge of the lower frequency band (4), and wherein
if the wideband carrier (w1) in the higher frequency band (5) cannot be located such that its third order intermodulation product with the narrowband carrier (n1) in the higher frequency band (5) is generated in the middle (7) of the frequency gap (6), locating the wideband carrier (w1) in the higher frequency band (5) at the higher edge of the higher frequency band (5).

11. Method for testing a receiver according to one of claims 8 to 10, wherein the method further comprising the steps:
- receiving a third multi-carrier signal in a lowest frequency band (3) of the maximum radio bandwidth (2) of the multi-band receiver (12), the third multi-carrier signal having a narrowband carrier (n1) at the lower edge of the lowest frequency band (3) and a wideband carrier (w1) at the higher edge of the lowest frequency band (3);
- receiving a fourth multi-carrier signal in a highest frequency band (5) of the maximum radio bandwidth (2) of the multi-band receiver (12), the fourth multi-carrier signal having a wideband carrier (w1) at the lower edge of the highest frequency band (5) and a narrowband carrier (n1) at the higher edge of the highest frequency band (5); and
- performing a multi-band receiver test using the received third and fourth signal

12. Method for testing a multi-band transmitter according to one of claims 8 to 11, wherein the narrowband carriers are carriers with the minimum declared carrier bandwidth and/or the wideband carriers are carriers with the maximum declared radio bandwidth.

13. Method for testing a multi-band receiver according to one of claims 8 to 12, wherein the performed receiver test is at least one of a adjacent channel selectivity and narrowband blocking test, a blocking characteristics test and a receiver intermodulation test.

14. Apparatus for generating a multi-band receiver testing signal, comprising:
- a first signal generator (20) for generating a first multi-carrier signal in a lower frequency band (4) of the maximum radio bandwidth (2) of the multi-band receiver (12), the first multi-carrier signal having a narrowband carrier (n1) located at the higher edge of the lower frequency band (4) and a wideband carrier (w1); and for generating a second multi-carrier signal in a higher frequency band (5) of the maximum radio bandwidth (2) of the multi-band receiver (12), the second multi-carrier signal having a narrowband carrier (n1) located at the lower edge of the higher frequency band (5) and a wideband carrier (w1); wherein
a frequency gap (6) is between the lower frequency band (4) and the higher frequency band (5); and wherein
the wideband carrier (w1) in the lower frequency band (4) is located in the lower frequency band (4) such that its third order intermodulation product with the narrowband carrier (n1) in the lower frequency band (4) is generated in the middle (7) of the frequency gap (6), and wherein
the wideband carrier (w1) in the higher frequency band (5) is located in the higher frequency band (5) such that its third order intermodulation product with the narrowband carrier (n1) in the higher frequency band (5) is generated in the middle (7) of the frequency gap (6);
- a second signal generator (17) for generating an interfering signal, and
- a first coupler (21) for coupling the signals of the first signal generator (20) and the second signal generator (17).

15. System for performing a multi-band transmitter test, comprising:
- a transmitter (11) including a signal generator for generating a first multi-carrier signal in a lower frequency band (4) of the maximum radio bandwidth (2) of the multi-band transmitter (11), the first multi-carrier signal having a narrowband carrier (n1) located at the higher edge of the lower frequency band (4) and a wideband carrier (w1); and for generating a second multi-carrier signal in a higher frequency band (5) of the maximum radio bandwidth (2) of the multi-band transmitter (11), the second multi-carrier signal having a narrowband carrier (n1) located at the lower edge of the higher frequency band (5) and a wideband carrier (w1); wherein
a frequency gap (6) is between the lower frequency band (4) and the higher frequency band (5); and wherein
the wideband carrier (w1) in the lower frequency band (4) is located in the lower frequency band (4) such that its third order intermodulation product with the narrowband carrier (n1) in the lower frequency band (4) is generated in the middle (7) of the frequency gap (6), and wherein
the wideband carrier (w1) in the higher frequency band (5) is located in the higher frequency band (5) such that its third order intermodulation product with the narrowband carrier (n1) in the higher frequency band (5) is generated in the middle (7) of the frequency gap (6);and
- a test equipment (14) comprising a receiver (15) for receiving the first and second signal, and
- a processor (16) for performing a transmitter test using the received first and second signal.
